# EUROPEAN PATENT APPLICATION

(11) **EP 4 818 643 A1**
(43) Date of publication of application: **07.10.2026**
(21) Application number: 25167424.8
(22) Date of filing: 31.03.2025
(51) Int. Cl.: G01C 21/34

(54) **COMPUTER-IMPLEMENTED METHOD AND APPARATUS FOR GENERATING NAVIGATION INSTRUCTIONS**

(71) Applicant: TomTom Navigation B.V., 1011 AC Amsterdam (NL)
(72) Inventor: FISCHER, Johannes Robert, 1011 AC Amsterdam (NL); BAZHIN, Dmitry, 1011 AC Amsterdam (NL); IVIC, David, 1011 AC Amsterdam (NL)
(74) Representative: Bardehle Pagenberg Partnerschaft mbB Patentanwälte Rechtsanwälte

(57) **Abstract**

A computer-implemented method for generating navigation instructions for a drive of a vehicle along a route to a destination is provided. The method comprises generating, based on map data, a polyline corresponding to the route, the polyline comprising a plurality of points, the plurality of points comprising a first point and a second point; computing at least one alternative route candidate from the first point to the second point, wherein the alternative route candidate differs from a section of the polyline connecting the first point and the second point, to guide the vehicle away from the route; and accepting or discarding the at least one alternative route candidate based on a deviation of the alternative route candidate from the polyline.

## Description

### Field

The present disclosure is in the field of generating navigation instructions for a drive of a vehicle. Particularly, the present disclosure provides improved methods for computing a suitable route for a user.

### Background

From the prior art, navigation apparatuses are known which allow a user to input a desired destination. These apparatuses then compute a route from a current location of the apparatus to the destination. After the route has been created, the apparatus then usually generates navigation instructions, guiding the user along the route towards the desired destination. Such navigation apparatuses commonly have knowledge of their location on a map, e.g., by using Global Positioning System (GPS) or similar positioning techniques. They use this knowledge to output to the user the next one or the next few instructions, which the user should follow in order to remain on the computed route to the desired destination.

Some known navigation systems are capable of adapting to changes along the route, for example, if the traffic conditions change. For example, while driving along a route, a traffic jam or other traffic obstruction may form or dissolve, which may trigger a navigation system to compute an alternative route avoiding the traffic obstruction.

The present disclosure aims at providing improved computation of routes and route alternatives.

### Summary

Aspects of the present disclosure concern a computer-implemented method for generating navigation instructions for a drive of a vehicle along a route to a destination. The method may comprise: generating, based on map data, a polyline corresponding to the route, the polyline comprising a plurality of points, the plurality of points comprising a first point and a second point; computing at least one alternative route candidate from the first point to the second point, wherein the alternative route candidate differs from a section of the polyline connecting the first point and the second point, to guide the vehicle away from the route; and accepting or discarding the at least one alternative route candidate based on a deviation of the alternative route candidate from the polyline.

In conventional navigation systems, an upcoming transient traffic obstruction, e.g. a traffic jam, an accident, or the like may trigger a navigation apparatus to compute a detour to avoid the upcoming traffic obstruction. However, such a detour may be unduly large, guiding a vehicle away from the original route entirely, because the optimal route (as calculated by the navigation system) may significantly deviate from the original route.

However, the user may not wish to be guided to a completely different route. For example, on a large scale there may be multiple different routes to go to a certain place, as for example different motorways, or combinations of motorways, or other streets within a long-distance traffic network. If the main route is computed and/or chosen by the user along one certain path, e.g., along one particular motorway of the long-distance traffic network, the user may not wish that the decision to go along an alternative route due to e.g. a transient traffic obstruction will lead to a switching of the navigation process to an entirely different main route, e.g., to an entirely different motorway than was originally planned. In a typical scenario, a user who is about to take a long drive may have a subjective preference for a particular motorway, and may initially choose this motorway over other alternative motorways, the latter representing even faster proposals made by the navigation system. In such a case it would be undesirable if a transient traffic obstruction leads to a situation where the user is guided entirely away from their initially chosen motorway to finish the route on one of the alternative motorways. Rather, the user may wish for a local detour of the obstruction, and the methods and apparatuses according to the present disclosure provide a solution to this task.

Thus, according to the present disclosure, the route may be modeled as a polyline, e.g., a line connecting a number of distinct points. An alternative route candidate may be computed by the navigation apparatus between two points of the polyline, and this candidate may then be either accepted or discarded based on a deviation of the alternative route candidate from the polyline. For example, an alternative route candidate may be more likely to be discarded if the deviation from the polyline is large.

This way, a vehicle may be able to avoid a certain street segment, e.g., with a traffic obstruction, and at the same time the user may still take the motorway originally planned (apart from the obstructed segment).

Thus, a navigation apparatus can avoid very large detours guiding the vehicle along an entirely different route, but the detour to avoid the traffic obstruction may be limited to the respective section of the polyline connecting two points, and may be selectively accepted or discarded based on the deviation from the polyline.

This provides for improved user experience, as well as improved computation efficiency, e.g., only a partial alternative route candidate may be computed, while for the rest of the route, the already computed path can still be used.

In some embodiments, each of the first point and the second point may correspond to a geographic point associated with a respective maneuver point.

A maneuver point may be a point where a driver (or, in the case of an autonomous vehicle, a steering algorithm) can make a decision regarding the route. For example, an intersection may provide the driver or steering algorithm with multiple possible ways to go, e.g., go straight, turn left, or turn right. Thus, an intersection may correspond to a "maneuver point". Using maneuver points as points of the polyline provides for improved computation efficiency, because in between maneuver points, i.e., where no decision of a driver or steering algorithm is possible, e.g., along a straight road, additional points usually do not provide any additional benefit.

In some embodiments, the deviation of the alternative route candidate from the polyline may correspond to a maximum distance of the alternative route candidate from the polyline. For example, the deviation of the alternative route candidate may be below or equal to the maximum distance. The maximum distance may be a preconfigured value, either set globally or in dependence of the nature of the current street or the obstruction. Also, the present disclosure allows for one or more user-configured values for the maximum distance.

There may be different ways of determining a deviation associated with the alternative route candidate. Using the maximum distance between the alternative route candidate and the polyline may provide for a simply derivable quantity, which may thus provide for good computational efficiency.

In some embodiments, accepting or discarding the alternative route candidate may comprise at least one of: accepting the at least one alternative route candidate based on the deviation not exceeding a threshold; discarding the at least one alternative route candidate based on the deviation exceeding a threshold. Thus, in some embodiments, if the at least one alternative route candidate exceeds a threshold, it may be discarded; if it does not exceed the threshold, it may be accepted.

Defining a threshold value may provide for a virtual corridor around the polyline. Accepting or discarding based on the deviation (not) exceeding the threshold may allow for an alternative route candidate to be accepted if the candidate lies within the corridor around the polyline (i.e., the deviation of the alternative route candidate does not exceed the threshold). Else, if the alternative route candidate does not lie within the virtual corridor, (i.e., the deviation of the alternative route candidate exceeds the threshold), the alternative route candidate may be discarded.

This way, the computer-implemented method may provide for accepting or discarding decisions regarding the alternative route candidate that are made in a simple and efficient manner, taking into account the user's preference to remain close to the route (i.e., the original main route) and not switch to an entirely different route.

In some embodiments, the method may further comprise: computing a time of arrival of the vehicle associated with the at least one alternative route candidate; and computing a time of arrival of the vehicle associated with the route. Accepting or discarding the at least one alternative route candidate may be further based on a relation between the time of arrival of the vehicle associated with the at least one alternative route candidate and the time of arrival of the vehicle associated with the route. Generically, the goal can be defined as cost optimization. For example, if the user's preference includes an indication to avoid highways, and a tunnel opens up, the method may in some embodiments identify a longer route, yet having less or no highway to drive, so the computed time of arrival actually may increase.

In some embodiments, accepting or discarding the at least one alternative route candidate may comprise at least one of: accepting the at least one alternative route candidate based on the time of arrival of the vehicle associated with the at least one alternative route candidate being prior to the time of arrival of the vehicle associated with the route; and discarding the at least one alternative route candidate based on the time of arrival of the vehicle associated with the at least one alternative route candidate being later than the time of arrival of the vehicle associated with the route.

The further assessment of the time of arrival (TOA) may ensure that the accepted alternative route candidate provides for a better proposal, i.e., the TOA may improve by taking the alternative route candidate. By assessing both the TOA and the deviation associated with the alternative route candidate, it is possible to find a better route (e.g. with improved TOA) while remaining within the virtual corridor (e.g., without switching to an entirely different route). Thus, the user experience may be overall improved.

Moreover, regarding the TOA, it may be ensured that the traffic obstruction is in fact avoided. That is, if a traffic jam has formed on the main route, e.g., on a highway, many vehicles may try to bypass the traffic jam by using alternative routes. This may lead to alternative routes next to the highway being congested, such that bypassing the traffic jam on the highway may in fact not improve or even worsen the overall TOA. Consequently, by accepting or discarding the alternative route candidate further based on the TOA, alternative route candidates which do not improve or worsen the TOA can be avoided.

In some embodiments, computing the at least one alternative route may be performed in response to the vehicle approaching at least one of the first point or the second point.

This way it can be ensured that the alternative route candidates are computed as necessary, i.e., by assessing a portion of the route following an upcoming point of the polyline, e.g., an upcoming maneuver point. This allows for an efficient use of computational resources, while ensuring that the alternative route candidates are computed and accepted or discarded based on up-to-date traffic data. Other events or conditions may also be evaluated when the calculation of one or more alternative route candidates is triggered, for example, consumption, time and/or weather dependent circumstances (e.g., road closures), etc.

In some embodiments, the method may further comprise: registering a road blockage on the route; determining that no alternative route candidate is available within a threshold distance from the polyline; and based on determining that no alternative route candidate is available within the threshold distance: computing an optimal route for the drive of the vehicle.

This allows to account for road blockages on the way. That is, in some cases, the route may be blocked entirely (for example due to an accident or a tunnel closed, etc.). Then, the virtual corridor may be too limiting to find an alternative route candidate therein, such that no way can be found to avoid the road blockage. In this case, the corridor (and even the original route) may be discarded, and a global route optimization may be performed, which then potentially guides the vehicle along an entirely different route. However, it may be advantageous to limit the global route optimization to cases where no possible way of avoiding a road blockage can be found within the virtual corridor.

A "road blockage" may not be limited to a complete blockage of the road in the sense that it is impossible for a vehicle to pass, but severe delays, for example due to large traffic jams, may be encompassed by the term "road blockage". For example, a traffic jam causing a delay in the TOA above a predefined threshold may be considered a "road blockage".

In some embodiments, the method may further comprise: computing a first route and a second route, each of the first route and the second route being suited for the drive of the vehicle to the destination; and receiving user input, wherein the user input is configured to select the first route as the route for the drive of the vehicle to the destination, wherein the first route is a suboptimal route and the second route is an optimal route.

The present disclosure may be particularly advantageous where a user, e.g. prior to starting a drive, in particular a long-distance drive, knowingly selects a suboptimal route from a selection of routes.

An "optimal route" may be a route providing for an optimal TOA at the desired destination. A "suboptimal route" may be a route providing for a TOA at the desired destination which is suboptimal compared the TOA associated with the optimal route.

The user may select the suboptimal route for a variety of reasons, such as habit, a desire to avoid highways, more beautiful scenery, or the like. Particularly in these cases, conventional navigation algorithms may often, when a traffic obstruction comes up, compute a global route optimization, which leads to the vehicle being guided to the optimal route, which the user originally chose not to use. Therefore, a user wishing to go along the suboptimal route may especially profit from the method described herein. However, the disclosure is not limited to the navigation along the suboptimal route, but may also be beneficial for a user traveling along the optimal route.

In some embodiments, accepting or discarding the at least one alternative route candidate based on the deviation of the alternative route candidate from the polyline may comprise discarding the at least one alternative route candidate based on the deviation being greater than a distance between the route and the second route.

This way it may be ensured that the alternative route candidates are discarded if they comprise or lead to the second route, i.e., the optimal route.

In some embodiments, the method may further comprise: generating navigation instructions for the drive of the vehicle along the at least one alternative route; and optionally outputting the generated navigation instructions.

This allows for making the driving instructions available to any entity making a steering decision. This entity may in some implementations be the driver of the vehicle, however in some implementations, e.g. in autonomous or semi-autonomous driving implementations, the entity making a decision may be a steering algorithm or steering component of the autonomous or semi-autonomous vehicle. That is, the "outputting" may be to a user, e.g., by means of visual and/or audible output via a display and/or speaker, or to another component, such as a steering component of an autonomously or semi-autonomously driving vehicle.

In one implementation of the present disclosure a navigation apparatus is provided. The navigation apparatus may comprise: means for generating, based on map data, a polyline corresponding to the route, the polyline comprising a plurality of points, the plurality of points comprising a first point and a second point; means for computing at least one alternative route candidate from the first point to the second point, wherein the alternative route candidate differs from a section of the polyline connecting the first point and the second point, to guide the vehicle away from the route; and means for accepting or discarding the at least one alternative route candidate based on a deviation of the alternative route candidate from the polyline.

In some embodiments, the navigation apparatus may further comprise means for implementing any method described herein.

In one implementation of the present disclosure, an apparatus for generating navigation instructions is provided. The apparatus may comprise a memory and one or more processors coupled to the memory. The one or more processors may be configured to: generate, based on map data, a polyline corresponding to the route, the polyline comprising a plurality of points, the plurality of points comprising a first point and a second point; compute at least one alternative route candidate from the first point to the second point, wherein the alternative route candidate differs from a section of the polyline connecting the first point and the second point, to guide the vehicle away from the route; and accept or discard the at least one alternative route candidate based on a deviation of the alternative route candidate from the polyline.

In some embodiments, the one or more processors may be further configured to implement any method described herein.

Other aspects of the present disclosure concern a vehicle comprising a navigation apparatus disclosed herein.

### Brief description of the drawings

Fig. 1 illustrates a schematic view of a first route and a second route, in accordance with aspects of the present disclosure.
Fig. 2 illustrates an obstructed route and an alternative route candidate, in accordance with aspects of the present disclosure.
Fig. 3 illustrates an obstructed route and an alternative route candidate within a corridor, in accordance with aspects of the present disclosure.
Fig. 4A illustrates an exemplary decision graph in accordance with aspects of the present disclosure.
Fig. 4B illustrates an exemplary decision graph 405 in accordance with aspects of the present disclosure.
Fig. 5 illustrates an exemplary display output of a navigation apparatus, in accordance with aspects of the present disclosure.
Fig. 6 illustrates a flow-chart of a computer-implemented method in accordance with aspects of the present disclosure.
Fig. 7 illustrates a navigation apparatus in accordance with aspects of the present disclosure.
Fig. 8 illustrates a schematic of a vehicle in accordance with aspects of the present disclosure.

### Detailed description of exemplary embodiments

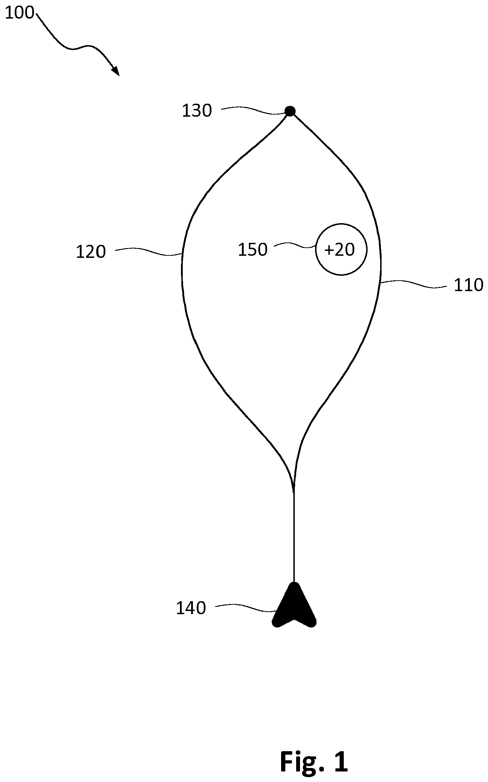

**Fig.** 1 illustrates a schematic view 100 of a first route 110 and a second route 120, in accordance with aspects of the present disclosure.

Both the first route and the second route may be suited for a drive of a vehicle to the destination 130. Thus, both the first route 110 and the second route 120 may start at the same start position 140 and end at the destination 130. The first route 110 and the second route 120 may be different from each other.

For example, the second route 120 may be an optimal route and the first route 110 may be a suboptimal route. For example, the first route 110 may provide for a time of arrival (TOA) at the desired destination which is suboptimal compared the TOA associated with the second route 120. For example, the first route 110 may cause a delay 150 of 20 minutes compared to the first route (TOA +20).

A navigation apparatus may compute both the first route 110 and a second route 120. In some aspects, the navigation apparatus may output some indication of both the first route 10 and the second route 120 to a user of the navigation apparatus, for example via a display of the navigation apparatus or some other means of outputting information, e.g., a speaker.

The navigation apparatus may then receive user input, wherein the user input may be configured to select the first route 110 as the route for the drive of the vehicle to the destination 130. For example, the user may select to go along the suboptimal route.

The present disclosure is worked most efficiently when the user selects to go along the suboptimal route, however, the disclosure is not limited thereto. The above-mentioned benefits occur also, if the user travels along the optimal route.

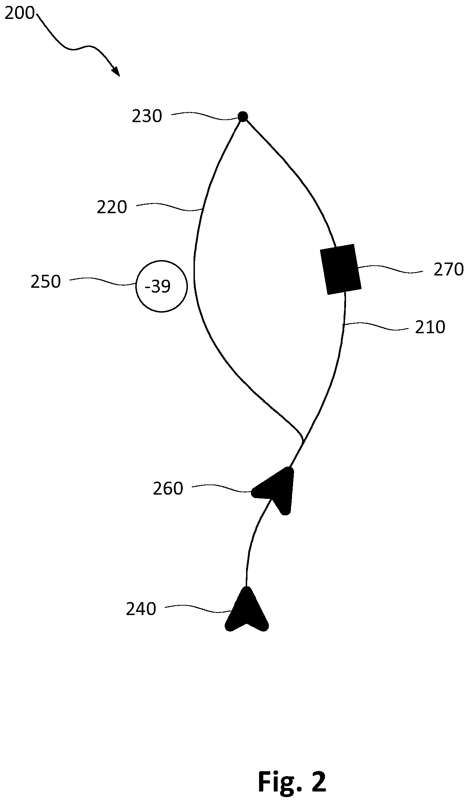

**Fig. 2** illustrates an example 200 including an obstructed route 210 and an alternative route candidate 220, in accordance with aspects of the present disclosure. For example, the obstructed route 210 may correspond to the first route 110 discussed with respect to Fig. 1.

The obstructed route may comprise an obstruction 270, such as a road blockage, a traffic jam, or the like, prohibiting or impairing continued travelling along the obstructed route 210. For example, the obstruction may form after the vehicle started travelling along the obstructed route 210. For example, the vehicle may have travelled from the starting position 240 to a current position 260 before information regarding a traffic obstruction 270 on the route is obtained. Such information may be obtained by the navigation apparatus itself, e.g., via cellular networks or the like, or by any entity which is in communication with the navigation apparatus.

In conventional navigation systems, such an occurrence may trigger the navigation apparatus to start a global route optimization in order to avoid the traffic obstruction. In other words, conventional navigation apparatuses aim at avoiding a traffic obstruction by taking a detour. To find an optimal detour, route optimization is performed based on the current traffic situation, to find the route providing optimal TOA given the current traffic situation. This may often cause large detours, and particularly may cause the navigation apparatus to switch to a different route 220 towards the destination 230. For example, the different route 220 may provide for a considerably improved TOA 250 (e.g., TOA -39), such that this different route 220 may be selected by the route optimization algorithm.

For example, if the vehicle travels along a suboptimal route (e.g., the first route 110 of Fig. 1) as selected by a user, an upcoming traffic obstruction 270 may cause the navigation apparatus to perform global route optimization, which may often lead to a switch back to the optimal route which was discarded by the user in selecting the suboptimal route.

Thus, usually the user does not appreciate a switch to an entirely different route 220 due to a traffic obstruction 270. The user may still wish to avoid the traffic obstruction 270, however, without switching to an entirely different route 220, particularly if they had discarded this route earlier in the process (e.g., the second route 120 of Fig. 1 when initially making the route choice).

The present disclosure aims at solving this problem by providing a navigation algorithm which allows avoiding of traffic obstructions without switching the drive of the vehicle to an entirely different route.

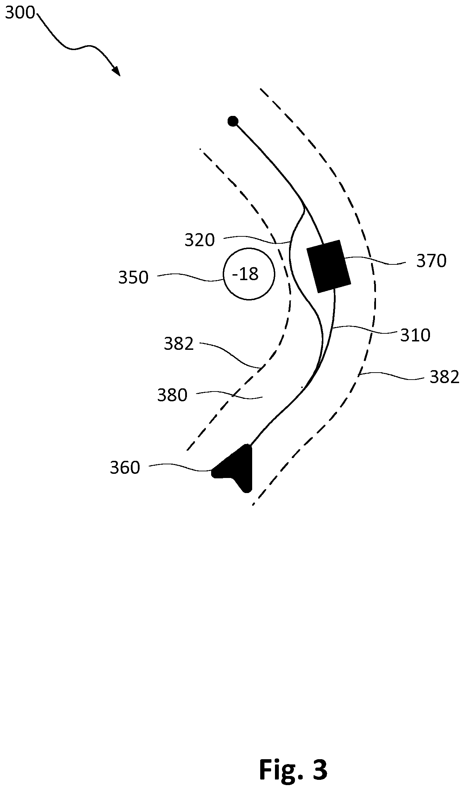

**Fig. 3** illustrates an example 300 of an obstructed route and an alternative route candidate 320 within a corridor 380, in accordance with aspects of the present disclosure. The obstructed route may be represented by a polyline 310 connecting individual points of the route, including a first point and a second point.

According to Figure 3, a traffic obstruction 370 may be registered upon the vehicle approaching a maneuver point along the polyline 310. For example, the obstruction 370 may be registered as the vehicle is at position 360.

The navigation apparatus may compute an alternative route candidate 320 which may bypass the traffic obstruction 370. In the example of Fig. 3, the alternative route candidate 320 may be calculated between two points of the polyline (the individual points are not shown in Fig. 3), i.e., two points where at each point a maneuver of the vehicle can be performed. In this example, the alternative route candidate 320 is placed within the corridor 380. The corridor 380 may be defined by boundaries 382, sometimes referred to as thresholds. An alternative route candidate 320 may be considered to be "within the corridor 380" if it does not cross either of the boundaries 382.

To test whether an alternative route candidate is within the corridor 380, a navigation algorithm may compute a maximum deviation of the alternative route candidate 320 from the polyline 310. For example, the maximum deviation may correspond to the shortest distance between the alternative route candidate 320 and the polyline, measured at a point of the alternative route candidate 320 which is furthest away from the polyline 310. If the maximum deviation is below a threshold value, for example below the thresholds 382, the alternative route candidate 320 may be considered to be within the corridor 380.

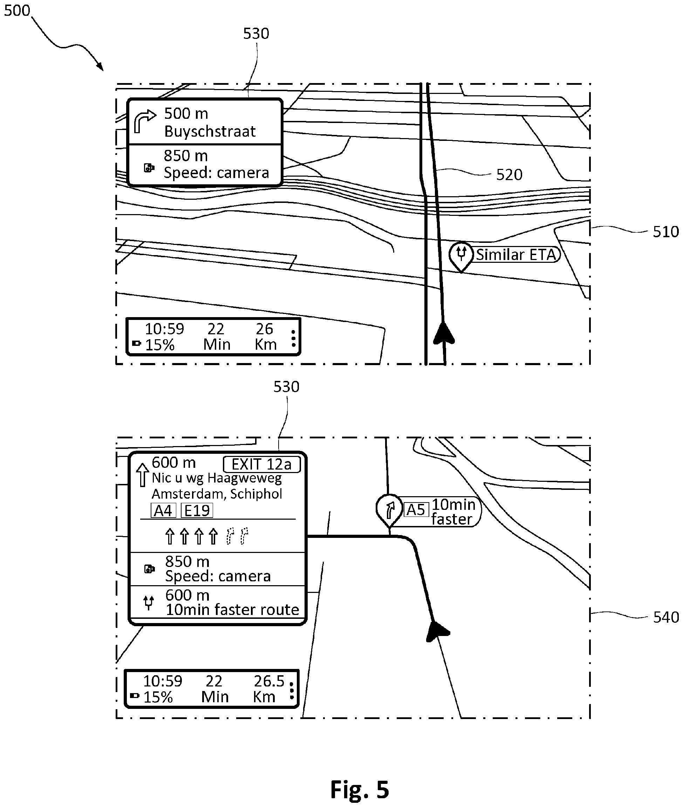

The alternative route candidate 320 being within the corridor 380 may lead to the alternative route candidate 320 being accepted by the computer-implemented method, so that some indication thereof is output to the user. That is, the alternative route candidate may be considered to be a viable alternative route and may be output by the algorithm. For example, the alternative route candidate may be displayed in a display of a navigation apparatus, as shown e.g. in Fig. 5, as a proposal to a user. In other examples, for instance if an autonomously or semi-autonomously driven vehicle is used, the alternative route candidate may be output to a route planning or steering component of the vehicle.

If an alternative route candidate 320 is not within the corridor 380 (not shown), i.e., if at least one boundary 382 is crossed by the alternative route candidate 320, the alternative route candidate 320 may be discarded by the computer-implemented method. That is, the candidate may be considered not to be a viable alternative route and the algorithm may omit outputting the alternative route candidate. No indication of this alternative route may be output to the user.

In this way, it can be ensured that no alternative route is suggested that comprises an unreasonably large detour. Particularly if the vehicle travels along a suboptimal route, it can be ensured that changing traffic conditions (e.g. forming of the traffic obstruction 370) do not lead to the vehicle being guided back to the optimal route contrary to the user's preferences.

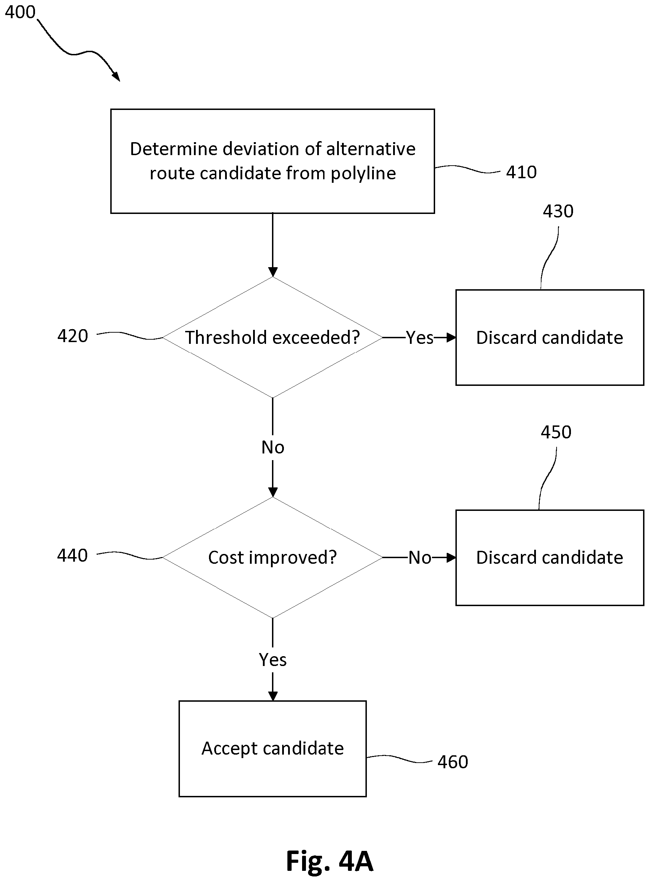

**Fig. 4A** illustrates an exemplary decision graph 400 in accordance with aspects of the present disclosure. Decision graph 400 illustrates how an algorithm may decide to accept or discard an alternative route candidate.

After computing an alternative route candidate (as discussed above with respect to Figs. 1-3), an algorithm may determine 410 a deviation of the alternative route candidate from the polyline. For example, the deviation may correspond to a maximum distance of the alternative route candidate from the polyline. However, other alternative or additional approaches for determining deviation are possible, such as for example a length of the alternative route candidate to the point of rejoining the polyline or the polyline corridor, similarity measure mapping points to have a minimal distance mapping, and the like.

At block 420, an algorithm may determine whether or not a predetermined threshold is exceeded. For example, the threshold may correspond to the boundaries 382 of Fig. 3.

If the threshold is exceeded ("Yes" at 420), the alternative route candidate may be discarded (block 430).

If the threshold is not exceeded ("No" at 420), the algorithm may determine at block 440 whether the cost associated with the alternative route candidate constitutes an improvement compared to the route following the polyline. For example, the cost may be considered to be improved if the TOA associated with the alternative route candidate is earlier than the TOA associated with the route following the polyline.

If the cost, e.g., the TOA, has not improved ("No" at 440), the alternative route candidate may be discarded (block 450). In one embodiment, the cost may not be always correlated with the TOA and/or travel distance, and/or consumption, etc., as it may depend on user preferences regarding the type of roads or road conditions, e.g., scenic routes, tolls, free hands driving, when the road conditions change (opening of a tunnel), etc.

If the cost has improved ("Yes" at 440), the alternative route candidate may be accepted (block 460).

It is noted that Fig. 4A relates to a particularly advantageous embodiment. However, it is not necessary to perform all steps described with respect to Fig. 4A. For example, it may be sufficient to make only the determination at block 420 and move straight to accepting the candidate (block 460) without checking if the TOA has improved. Moreover, the order of succession may be different than illustrated in Fig. 4A. For example, the improved TOA (block 440) may be checked before checking if the threshold is exceeded (block 420).

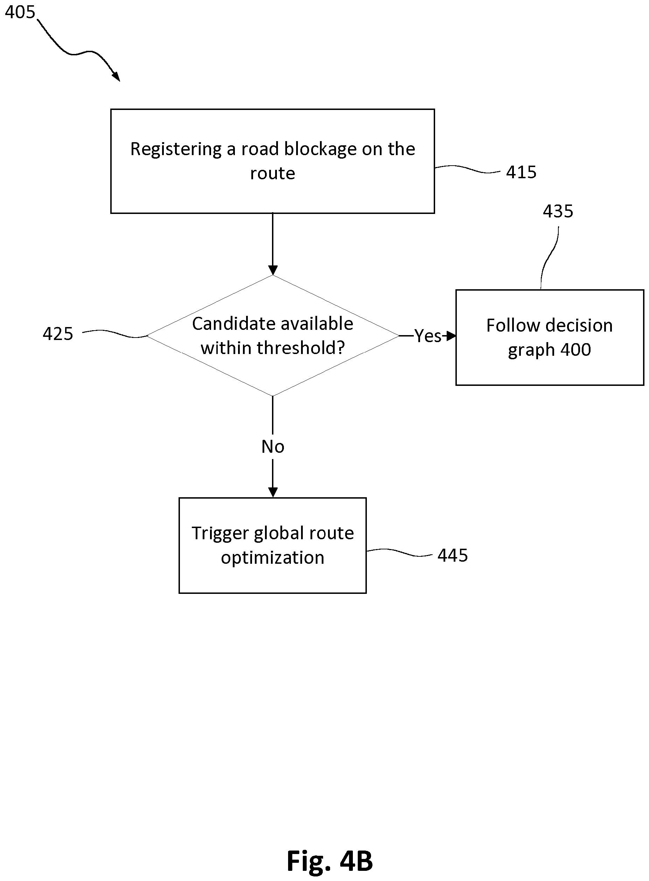

**Fig. 4B** illustrates an exemplary decision graph 405 in accordance with aspects of the present disclosure. Decision graph 400 illustrates how an algorithm may behave if no alternative route candidate is available within the corridor 380.

According to Fig. 4B, a road blockage may be registered along a current route (block 415). Upon registering the road blockage, an algorithm may determine whether an alternative route candidate is available within the threshold (block 425). For example, if a route leads through a bottleneck, such as a tunnel through a mountain range, and the bottleneck is blocked, there may not be an alternative route candidate available within the corridor 380, because a larger detour may be necessary to avoid the blockage.

If the algorithm determines that one or more alternative route candidate is available within the threshold ("Yes" at 425), the decision graph 400 described with respect to Fig. 4A may be followed (block 435).

If the algorithm determines that no candidate is available within the threshold ("No" at 425), a global route optimization may be triggered (block 445). That is, the corridor 380 may be discarded and the entire route network may be searched for the optimal route to the destination.

Moreover, if, after following the decision graph 400 for all available alternative route candidates within the corridor, it is determined that although alternative route candidates are available within the corridor, none of the candidates provides a better TOA than the current route, the global route optimization may also triggered.

This way it may be ensured that, if the corridor does not provide a suitable alternative route candidate, the road blockage can still be avoided.

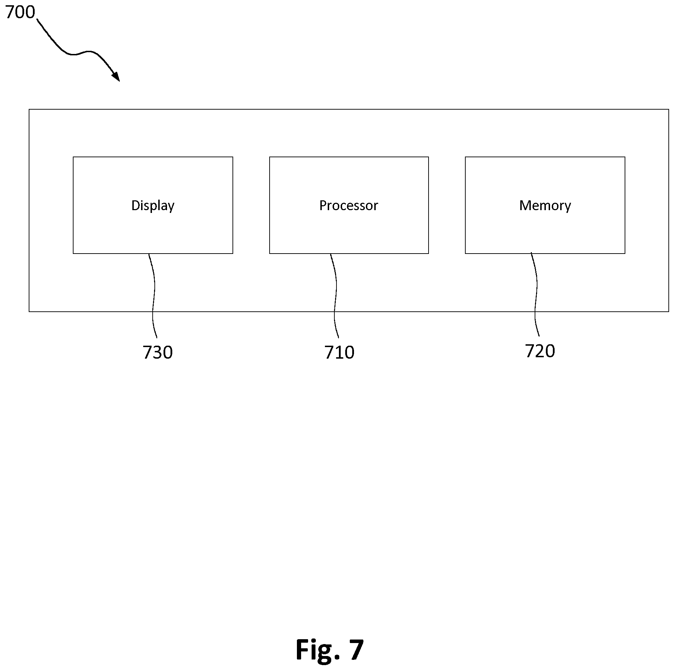

**Fig. 5** illustrates an exemplary display output 500 of a navigation apparatus, in accordance with aspects of the present disclosure. The navigation apparatus may correspond to a navigation apparatus described elsewhere herein, for example with reference to Fig. 7.

In a first display output 510, the polyline 520 corresponding to the route along which the vehicle is driving may be displayed. Further, upcoming maneuver points may be displayed in a display unit 530. The display unit 530 may further show upcoming obstacles, such as speed cameras, construction sites, accidents, traffic jams, road blockages, or the like.

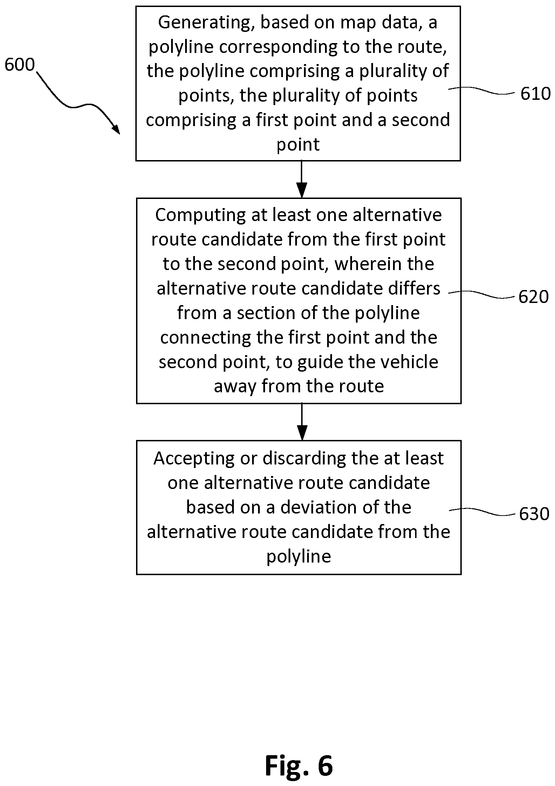

If a suitable alternative route candidate was found (for example, based on a method described elsewhere herein, particularly in Figs. 4A, 4B or 6), such an alternative route candidate may also be displayed in display unit 530, as depicted in the second display output 540. The user can then decide to follow the proposed alternative route candidate, for example by manually selecting the displayed candidate (e.g., by tapping the respective area of a touch-sensitive display or by operating a respective button) or by steering along the alternative route candidate and deviating from the current route ("Decide-by-Steering").

Decide-by-steering may only be suitable for manually driven vehicles. For autonomous or semi-autonomous vehicles, the alternative route candidate may be selected automatically by a steering component, or the user may select the alternative route candidate manually (e.g., by tapping the respective area of a touch-sensitive display or by operating a respective button).

**Fig. 6** illustrates a flow-chart of a computer-implemented method 600 in accordance with aspects of the present disclosure.

The method may comprise generating 610, based on map data, a polyline corresponding to the route, the polyline comprising a plurality of points, the plurality of points comprising a first point and a second point.

In some aspects, each of the first point and the second point may correspond to a geographic point associated with a respective maneuver point.

The method may further comprise computing 620 at least one alternative route candidate from the first point to the second point, wherein the alternative route candidate differs from a section of the polyline connecting the first point and the second point, to guide the vehicle away from the route.

In some aspects, computing the at least one alternative route candidate may be performed in response to the vehicle approaching at least one of the first point or the second point.

The method may further comprise accepting or discarding 630 the at least one alternative route candidate based on a deviation of the alternative route candidate from the polyline.

In some aspects, the deviation of the alternative route candidate from the polyline may correspond to a maximum distance of the alternative route candidate from the polyline.

In some aspects, accepting or discarding the alternative route candidate may comprise at least one of:
accepting the at least one alternative route candidate based on the deviation not exceeding a threshold; and
discarding the at least one alternative route candidate based on the deviation exceeding a threshold.

In some aspects, the method may further comprise:
computing a time of arrival of the vehicle associated with the at least one alternative route candidate; and
computing a time of arrival of the vehicle associated with the route, wherein accepting or discarding the at least one alternative route candidate is further based on a relation between the time of arrival of the vehicle associated with the at least one alternative route candidate and the time of arrival of the vehicle associated with the route.

In some aspects, accepting or discarding the at least one alternative route candidate may comprise at least one of:
accepting the at least one alternative route candidate based on the time of arrival of the vehicle associated with the at least one alternative route candidate being prior to the time of arrival of the vehicle associated with the route; and
discarding the at least one alternative route candidate based on the time of arrival of the vehicle associated with the at least one alternative route candidate being later than the time of arrival of the vehicle associated with the route.

In some aspects, the method 600 may further comprise:
registering a road blockage on the route;
determining that no alternative route candidate is available within a threshold distance from the polyline; and
based on determining that no alternative route candidate is available within the threshold distance:
   computing an optimal route for the drive of the vehicle.

In some aspects, the method 600 may further comprise:
computing a first route and a second route, each of the first route and the second route being suited for the drive of the vehicle to the destination; and
receiving user input, wherein the user input is configured to select the first route as the route for the drive of the vehicle to the destination, wherein the first route is a suboptimal route and the second route is an optimal route.

In some aspects, accepting or discarding the at least one alternative route candidate based on the deviation of the alternative route candidate from the polyline may comprise:
discarding the at least one alternative route candidate based on the deviation being greater than a distance between the route and the second route.

In some aspects, the method 600 may further comprise:
generating navigation instructions for the drive of the vehicle along the at least one alternative route candidate; and optionally
outputting the generated navigation instructions.

**Fig. 7** illustrates a navigation apparatus in accordance with aspects of the present disclosure.

According to Fig. 7, the apparatus may comprise a processor 710 and a memory 720 coupled to the processor 710. The apparatus may further comprise a display 730 for outputting information to a user.

The processor 710 may be configured to generate, based on map data, a polyline corresponding to the route, the polyline comprising a plurality of points, the plurality of points comprising a first point and a second point. Thus, the apparatus 700 may comprise at least one means for generating, based on map data, a polyline corresponding to the route, the polyline comprising a plurality of points, the plurality of points comprising a first point and a second point.

The processor 710 may be configured to compute at least one alternative route candidate from the first point to the second point, wherein the alternative route candidate differs from a section of the polyline connecting the first point and the second point, to guide the vehicle away from the route. Thus, the apparatus 700 may comprise at least one means for computing at least one alternative route candidate from the first point to the second point, wherein the alternative route candidate differs from a section of the polyline connecting the first point and the second point, to guide the vehicle away from the route.

The processor 710 may be configured to accept or discard the at least one alternative route candidate based on a deviation of the alternative route candidate from the polyline. Thus, the apparatus 700 may comprise at least one means for accepting or discarding the at least one alternative route candidate based on a deviation of the alternative route candidate from the polyline.

Moreover, the processor 710 may be configured to implement any method described herein, particularly any method described herein with reference to Fig. 6. Thus, the apparatus 700 may comprise at least one means for implementing any method described herein, particularly any method described herein with reference to Fig. 6.

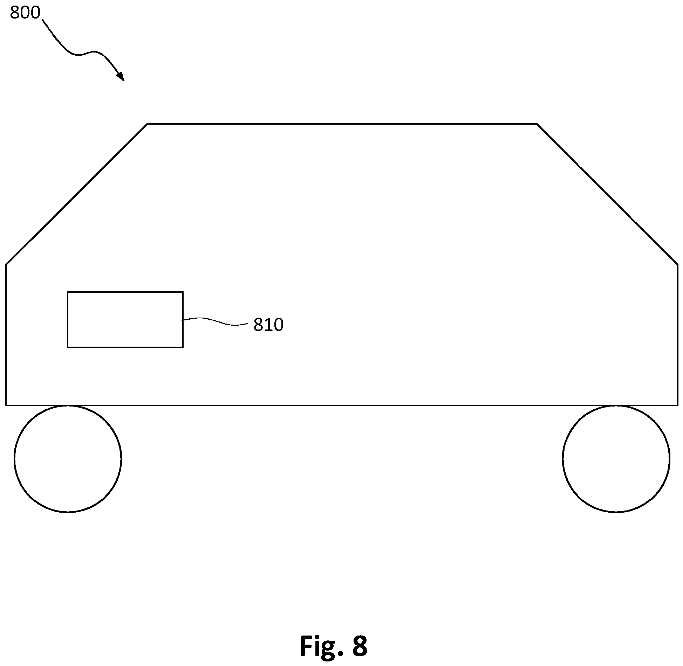

**Fig. 8** illustrates a schematic of a vehicle in accordance with aspects of the present disclosure.

According to Fig. 8, the vehicle 800 may comprise an apparatus 810, which may correspond to the apparatus 700 described herein with reference to Fig. 7. The apparatus 810 may comprise at least one means for performing 11any method described herein, particularly for performing any method described herein with reference to Fig. 6. The apparatus may comprise a memory and one or more processors coupled to the memory, the processor being configured to perform any method described herein, particularly to perform any method described herein with reference to Fig. 6.

### Reference numbers

- 10, 110: first route
- 100: schematic view
- 120: second route
- 130, 230: destination
- 140: same start position
- 150: delay
- 200, 300: example
- 210: obstructed route
- 220, 320: alternative route candidate
- 240: starting position
- 260: current position
- 270, 370: obstruction
- 270, 370: traffic obstruction
- 310, 520: polyline
- 360: position
- 380: corridor
- 382: boundaries
- 400, 405: decision graph
- 400: decision graph
- 500: exemplary display output
- 510: first display output
- 530: display unit
- 540: second display output
- 600: computer-implemented method
- 700, 810: navigation apparatus
- 710: processor
- 720: memory
- 730: display
- 800: vehicle

## Claims

1. A computer-implemented method for generating navigation instructions for a drive of a vehicle along a route to a destination, the method comprising:
generating, based on map data, a polyline corresponding to the route, the polyline comprising a plurality of points, the plurality of points comprising a first point and a second point;
computing at least one alternative route candidate from the first point to the second point, wherein the alternative route candidate differs from a section of the polyline connecting the first point and the second point, to guide the vehicle away from the route; and
accepting or discarding the at least one alternative route candidate based on a deviation of the alternative route candidate from the polyline.

2. The computer-implemented method of claim 1, wherein each of the first point and the second point corresponds to a geographic point associated with a respective maneuver point.

3. The computer-implemented method of any one of the preceding claims, wherein the deviation of the alternative route candidate from the polyline corresponds to a maximum distance of the alternative route candidate from the polyline.

4. The computer-implemented method of any one of the preceding claims, wherein accepting or discarding the alternative route candidate comprises at least one of:
accepting the at least one alternative route candidate based on the deviation not exceeding a threshold; and
discarding the at least one alternative route candidate based on the deviation exceeding a threshold.

5. The computer-implemented method of any one of the preceding claims, further comprising:
computing a time of arrival of the vehicle associated with the at least one alternative route candidate; and
computing a time of arrival of the vehicle associated with the route,
wherein accepting or discarding the at least one alternative route candidate is further based on a relation between the time of arrival of the vehicle associated with the at least one alternative route candidate and the time of arrival of the vehicle associated with the route.

6. The method of claim 5, wherein accepting or discarding the at least one alternative route candidate comprises at least one of:
accepting the at least one alternative route candidate based on the time of arrival of the vehicle associated with the at least one alternative route candidate being prior to the time of arrival of the vehicle associated with the route; and
discarding the at least one alternative route candidate based on the time of arrival of the vehicle associated with the at least one alternative route candidate being later than the time of arrival of the vehicle associated with the route.

7. The computer-implemented method of any one of the preceding claims, wherein computing the at least one alternative route candidate is performed in response to the vehicle approaching at least one of the first point or the second point.

8. The computer-implemented method of any one of the preceding claims, further comprising:
registering a road blockage on the route;
determining that no alternative route candidate is available within a threshold distance from the polyline; and
based on determining that no alternative route candidate is available within the threshold distance:
computing an optimal route for the drive of the vehicle.

9. The computer-implemented method of any one of the preceding claims, further comprising:
computing a first route and a second route, each of the first route and the second route being suited for the drive of the vehicle to the destination; and
receiving user input, wherein the user input is configured to select the first route as the route for the drive of the vehicle to the destination, wherein the first route is a suboptimal route and the second route is an optimal route.

10. The method of claim 9, wherein accepting or discarding the at least one alternative route candidate based on the deviation of the alternative route candidate from the polyline comprises:
discarding the at least one alternative route candidate based on the deviation being greater than a distance between the route and the second route.

11. The computer-implemented method of any one of the preceding claims, the method further comprising:
generating navigation instructions for the drive of the vehicle along the at least one alternative route candidate; and optionally
outputting the generated navigation instructions.

12. A navigation device comprising at least one means for performing the method of one or more of claims 1 to 11.

13. A vehicle comprising the navigation device of claim 12.
